Europäisches Patentamt

(19) **European Patent Office**

Office européen des brevets

(11) Publication number: **0 030 062**
**B1**

(12) # EUROPEAN PATENT SPECIFICATION

(45) Date of publication of patent specification: **13.06.84**

(51) Int. Cl.³: **F 16 L 17/02, F 16 L 47/06**

(21) Application number: **80201123.9**

(22) Date of filing: **27.11.80**

(54) **A pipe part and a resilient sealing body therefor.**

(30) Priority: **28.11.79 NL 7908625**

(43) Date of publication of application:
**10.06.81 Bulletin 81/23**

(45) Publication of the grant of the patent:
**13.06.84 Bulletin 84/24**

(84) Designated Contracting States:
**AT BE CH DE FR GB IT LI LU NL SE**

(56) References cited:
**FR - A - 1 348 390**
**FR - A - 1 576 620**
**FR - A - 2 144 424**
**FR - A - 2 299 586**
**FR - A - 2 388 196**
**GB - A - 1 227 309**
**NL - A - 7 501 344**
**NL - A - 7 600 928**
**NL - A - 7 902 516**

(73) Proprietor: **WAVIN B.V.**
**Händellaan 251**
**NL-8031 EM Zwolle (NL)**

(72) Inventor: **Oostenbrink, Albertus Anthony**
**13 Irenestraat**
**NL-7772 CS Hardenberg (NL)**

(74) Representative: **van der Veken, Johannes Adriaan**
**et al,**
**EXTERPATENT Willem Witsenplein 4**
**NL-2596 BK 's-Gravenhage (NL)**

Courier Press, Leamington Spa, England.

# Description

The invention relates to a pipe part with a socket end, comprising a resilient sealing body being firmly connected with a retaining ring which snappingly engages a recess in the pipe part.

Such a pipe part with a socket end is known from FR—A—1 576 620. In said known pipe part the sealing body is retained by a retaining ring presenting a U-shaped or J-shaped longitudinal section, and engages the socket end snappingly, for which purpose the inner side of the retaining ring and the outer side of the socket end have a corrugated surface.

Said known pipe part presents the disadvantage that mounting the retaining ring on the sealing body not only requires many labour expenditures, but also high amounts of material, as the retaining ring has to be mounted upon the outer side of the socket end of increased wall thickness. It is furthermore very disadvantageous that the outer side of the socket end has to be provided with a corrugated surface, whilst the inner side of the retaining ring has to be provided with an adapted corrugated surface.

Finally, the retaining ring might be pulled off from the socket during transport of socket pipes with a retaining ring fixed to the socket.

The impact resistance of the socket end is also sometimes insufficient and moreover, the retaining ring may be damaged during impact loads.

The present invention aims to provide a pipe part of the aforementioned type alleviating said disadvantages.

This object is attained in accordance with the invention in that the recess extends from the front end surface of the socket into the interior of the end of the socket.

In this way the retaining ring cannot be easily removed from the socket, can be easily centered during mounting and is not damaged during impact loads. Moreover, the impact resistance of the recessed socket end is greater than the impact resistance of a non recessed socket end.

The recess for receiving the part of the retaining ring which snappingly engages therein, is advantageously bounded by two walls, the thickness of same not increasing towards their free ends, preferably said thickness being substantially equal. Due to the latter measures and as the two walls appropriately extend towards the axis of the pipe part at an angle of 10 to 40°, and more preferably 25°, the mould part forming the socket end can be removed simultaneously with the mould core from the closed mould, after moulding a socket end of this type without said socket end being subjected to a permanent deformation. An additional advantageous result is that the impact resistance of this pipe part with a socket end is very high. Under an impact load, the outer side of the recess will spring towards the inner side of the socket end, the bending moment being limited by the material of the retaining ring.

The expression "firmly connected with the retaining ring" comprises the possibility of a disconnection between the sealing body and the retaining ring when a male pipe part is pushed onto the socket end. In that case said disconnection will not impair the action of the sealing ring.

The dimensions of the retaining ring may be such that the outer circumference of the socket end is subjected to a compressive stress.

The sealing body being firmly connected with the retaining ring, may advantageously be shaped by means of injection moulding, said retaining ring then e.g. consisting of polyethylene or of a semi-rigid polyvinylchloride, or a rather rigid weather-resistant rubber, respectively.

The sealing body of the assembly then consists of a thermoplastics rubber, which may be properly connected with the material of the retaining ring. A suitable material for said resilient sealing body consists e.g. of an ethylene propylenediene terpolymer mixed with polyethylene or of an ethylene-cyclopentadiene copolymer, which copolymers can be postcured outside an injection mould in a heating oven or tunnel, whether or not adding peroxides or other curing-improving additives. Styrenebutadiene rubber may also be used as a material for moulding the sealing body.

The advantageous result of an embodiment of the present invention as described hereinbefore, is that the sealing body and the retaining ring may be simultaneously moulded by co-injection during one and the same operation. Mounting of an assembly consisting of a retaining ring and a sealing body being firmly connected therewith, is very simple. Moreover, said mounting can be mechanized in a relatively cheap manner as the assembly of retaining ring and sealing body is sufficiently rigid and only one axial movement is required for properly positioning said assembly.

The present invention will be illustrated with respect to an embodiment in the drawing, wherein

Figure 1 shows a first embodiment of a pipe part with a socket end according to the invention;

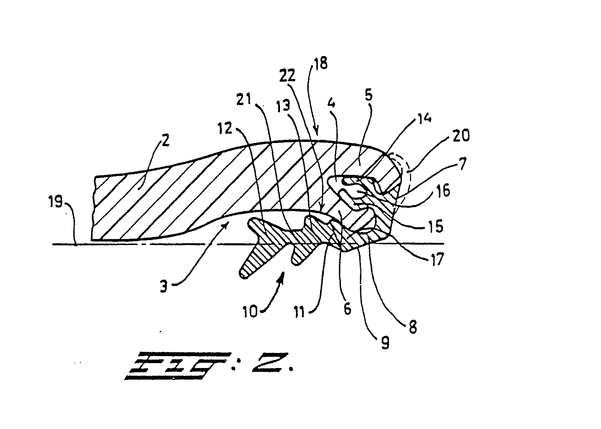

Figure 2 a part of a pipe part of fig. 1, showing a variant of the installed retaining ring.

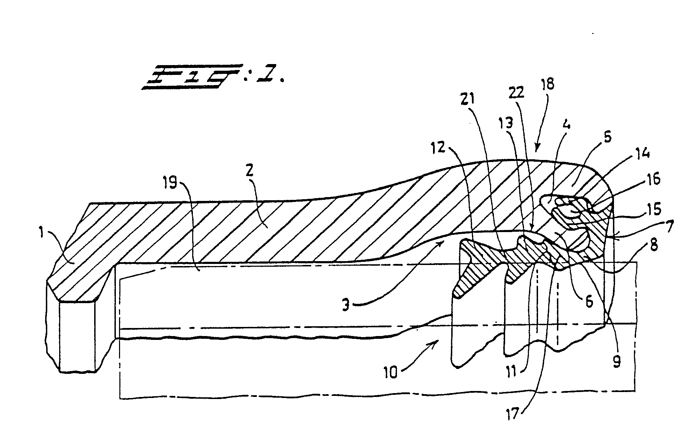

Figure 1 shows a pipe part 1 of thermoplastics material, such a polyvinylchloride, comprising a socket end 2. The inner side of the socket end 2 is provided with an annular sealing body receiving chamber 3, with a sealing body receiving chamber wall 22 for the receipt of an annular resilient sealing body 10. This annular resilient sealing body 10 is firmly connected with a retaining ring 7, at the location of transition 11. The retaining ring 7 of relatively rigid material, such as polyethylene, a semi-rigid polyvinylchloride or a rather rigid weather-resistant rubber of preferably polyethylene, comprises two resiliently deformable lips 14 and 15 in between which a space 16 is present, permitting a deformation of said lips 14 and 15.

Thus the lips can be deformed in order to have the end part of the retaining ring 7 with the lips 14 and 15 snappingly engaged in a recess 4 in the front part of the socket end so that said ring is retained.

The recess 4 is bounded by the lip walls 5 and 6, having substantially the same wall thickness towards their free ends; said wall thickness will at any rate not get thicker. In view of the latter, and due to the fact that the two walls extend towards the pipe axis under an angle of 10 to 40°, and more preferably of 25°, the respective mould can stay closed during the moulding procedure whilst the mould portion forming the socket end 2 may be removed simultaneously with the mould core, without said socket end undergoing any important permanent deformation.

The axis of the recess 4 extends appropriately under an angle with respect to the axis of the pipe part, so that said construction can be easily manufactured and a seal can be applied which will be retained, even under unfavourable conditions. Actually, said construction is dischargeable, so that the cores can be removed while the outer mould remains closed.

As described hereinbefore, the annular sealing body 10 is firmly connected with the retaining ring 7. This is accomplished by moulding said annular sealing body from a mixture of polyethylene and ethylenepropylenediene terpolymer, although a mixture consisting for example of an ethylene-cyclopentadiene copolymer, may also be employed. Said copolymers may be postcured outside an injection mould in an oven and/or by adding a peroxide. If desired, the annular resilient sealing body can also be shaped from a styrenebutadiene rubber or from mixtures containing said rubber.

Using a material for the retaining ring 7 consisting of e.g. plasticized polyvinylchloride which will subsequently get more rigid will not be disadvantageous, as the enclosure of the sealing body will only be improved by the latter.

The cross-sectional surface at the location of the transition 11, is considerably greater than that of body 21 of the sealing body 10. Two components for the retaining ring, sealing body respectively, may be chosen, which will get connected with each other during a co-injection.

An end part 17 of the retaining ring 7 extends into the sealing body receiving chamber 3 in such a manner that the retaining ring 7 cannot possibly be pushed outwardly as during an outward movement of a male pipe part, said end part 17 cannot pass between the socket end and the outer wall of the male pipe part.

As previously described, the recess 4 is accommodated in the end portion 18 of the socket end 2.

The retaining ring 7 advantageously comprises a mouth part 8, with a truncated conical surface 9, the smallest inner diameter of same being preferably less than the outer diameter of a male pipe part, so that even when the resilient sealing body 10 would get disconnected from the retaining ring 7 due to the insertion of a male pipe part, said sealing body would not get dislodged from the socket end and will still function optimally. Furthermore, a male pipe part 19 is optimally centered in the socket end, so that the dimensions of the sealing body 10 may be kept smaller and thus shorter socket ends may be used.

As the thickness of walls 5 and 6 which bound the recess 4, is substantially equal towards their free end, the impact resistance of the present socket end is greater than that of a solid socket end. If a socket end according to the present invention is subjected to an impact load, wall 5 will spring towards the inside and function as a spring blade, the bending moment being limited by the retaining ring 7.

The retaining ring may be so proportioned that in the outer circumference of the socket end, a compressive stress prevails, which permits a still greater absorption of a possible impact load.

The retaining ring 7 may advantageously comprise a resilient part 20, which restricts any dangers of tears in the pipe part with socket end as especially at low temperatures, a part of the impact load is now absorbed by said resilient part, thereby reducing said impact in such a way that no tears are formed.

Mounting the assembly of sealing body with retaining ring is very simple, as only one part, to wit the head with lips 14 and 15, has to be pressed into the aforementioned recess 4, which latter action may be mechanized.

The longitudinal cross-section of the sealing body 10 advantageously consists of two or more triangles 12 and 13, interconnected by body 21, which triangles will tilt at the moment that a male pipe part 19 is inserted and are only slightly compressed by said insertion. Thus, the force as required for the insertion of said male pipe part, is rather small, whilst the seal as applied will maintain its sealing function, even when considerable subsidences of the soil or deformations of the installed pipeline occur. The compression of the sealing body is likewise favourably improved by this shape which will increase the reliability in the long run.

According to a very advantageous embodiment, the construction may be such that at the moment that a male pipe part 19 may be pushed out of socket end 2, the two triangles 12 and 13 of the sealing body 10 exert such a power upon the end portion 17 of the retaining ring 7 that said portion 17, also in view of a duly chosen extension of the inner wall of the socket end, is pressed vigorously against said male pipe part. Thus said pushing out of the male pipe part is avoided. The latter action may be improved by providing the male pipe part with corrugations, which may be especially important for pipe lines to be embedded in concrete.

## Claims

1. A pipe part (1) with a socket end (2) comprising a resilient sealing body (10) being firmly connected with a retaining ring (7) which snappingly engages a recess (4) in the pipe part (1), characterized in that the recess (4) extends from the front end surface of the socket into the interior of the end of the socket.

2. A pipe part according to claim 1, characterized in that the recess (4) is bounded by two recess walls (5 and 6) of equal thickness towards their free end, said two walls (5 and 6) of the recess (4) extending at an angle of 10 to 40°, preferably of approximately 25°, with respect to the axis (23) of the pipe part (1).

3. A pipe part according to claims 1 or 3, characterized in that the engageable end part of the retaining ring (7) comprises two resiliently deformable lips (14, 15).

4. A pipe part according to any one or more of the preceding claims, characterized in that the dimensions of the retaining ring (7) are such that the outer circumference of the socket end is subjected to a compressive stress.

5. A pipe part according to claims 1 to 4, characterized in that the material of the retaining ring (7) extends into the sealing body receiving chamber (3) of the socket end (2) and a part of recess wall (6) bounding said recess (4) is provided with an inwardly extending projection engaging a hollow on the outer side of a mouth part (8) of the retaining ring.

6. A pipe part according to any one or more of the preceding claims, characterized in that the cross-section of the sealing body (10) consists of two or more triangles (12, 13) being interconnected by body (21) of said sealing body (10) which triangles will tilt at the moment that a male pipe part is inserted.

7. A pipe part according to any one or more of the preceding claims, characterized in that the retaining ring (7) comprises a truncated conical surface (9) of a decreasing diameter, starting from its frontside, the smallest inner diameter of the said truncated conical surface (9) preferably being less than the outer diameter of the male pipe part to be inserted.

8. A pipe part according to any one or more of the preceding claims, characterized in that the retaining ring (7) comprises a resilient part (20) engaging the front end surface of the socket (2).

9. A pipe part according to any one or more of the preceding claims, characterized in that the sealing body (10) is firmly connected with the retaining ring (7) by means of co-injection, the retaining ring consisting of a thermoplastics or of a rigid weather-resistant rubber, whilst the sealing body consists of a thermoplastics rubber.

10. A pipe part according to any one or more of the preceding claims, characterized in that a male pipe part (19) engages the sealing body (10) and extends in the interior of the socket end.

## Revendications

1. Partie de tuyau (1) avec une extrémité formant partie femelle (2) comprenant un corps élastique formant joint (10) fermement relié à une bague de retenue (7) qui s'emboîte par encliquetage dans une cavité (4) de la partie de tuyau (1), caractérisée en ce que la cavité (4) s'étend de la surface d'extrémité frontale de la partie femelle jusqu'à l'intérieur de l'extrémité de la partie femelle.

2. Partie de tuyau selon la revendication 1, caractérisée en ce que la cavité (4) est limitée par deux parois de cavité (5 et 6) d'égale épaisseur vers leur extrémité libre, lesdites deux parois (5 et 6) de la cavité (4) s'étendant suivant un angle de 10 à 40°, de préférence d'approximativement 25°, par rapport à l'axe (23) de la partie de tuyau (1).

3. Partie de tuyau selon la revendication 1 ou 2, caractérisée en ce que la partie d'extrémité engageable de la bague de retenue (7) comprend deux lèvres élastiquement déformables (14, 15).

4. Partie de tuyau selon une ou plusieurs des revendications précédentes, caractérisée en ce que les dimensions de la bague de retenue (7) sont telles que la circonférence extérieure de l'extrémité formant partie femelle est soumise à une contrainte compressive.

5. Partie de tuyau selon les revendications 1 à 4, caractérisée en ce que la matière de la bague de retenue (7) s'étend dans la chambre (3) recevant le corps formant joint de l'extrémité formant partie femelle (2) et en ce qu'une partie de paroi (6) limitant ladite cavité (4) est pourvue d'un prolongement s'étendant vers l'intérieur, en contact avec un creux de la face extérieure d'une partie d'embouchure (8) de la bague de retenue.

6. Partie de tuyau selon une ou plusieurs des revendications précédentes, caractérisée en ce que la section du corps formant joint (10) se compose de deux ou plusieurs triangles (12, 13) interconnectés par un corps (21) dudit corps formant joint (10), lesquels triangles s'inclinent au moment de l'introduction d'une partie de tuyau mâle.

7. Partie de tuyau selon une ou plusieurs des revendications précédentes, caractérisée en ce que la bague de retenue (7) comprend une surface conique tronquée (9) de diamètre décroissant, en partant de sa face frontale, le plus petit diamètre intérieur de ladite surface conique tronquée (9) étant de préférence inférieur au diamètre extérieur de la partie de tuyau mâle à introduire.

8. Partie de tuyau selon une ou plusieurs des revendications précédentes, caractérisée en ce que

que la bague de retenue (7) comprend une partie élastique (20) en contact avec la surface d'extrémité frontale de la partie femelle (2).

9. Partie de tuyau selon une ou plusiers des revendication précédentes, caractérisée en ce que le corps formant joint (10) est fermement relié à la bague de retenue (7) par coinjection, la bague de retenue étant constituée d'une matière thermoplastique ou d'un caoutchouc rigide résistant aux intempéries, tandis que le corps formant joint est constitué d'un caoutchouc thermoplastique.

10. Partie de tuyau selon une ou plusieurs des revendications précédentes, caractérisée en ce qu'une partie de tuyau mâle (19) est en contact avec le corps formant joint (10) et s'étend à l'intérieur de l'extrémité formant partie femelle.

## Patentansprüche

1. Rohrteil (1) mit einem Muffenende (2), das einen elastischen Dichtungskörper (10) aufweist, der mit einem in eine Aussparung (4) in dem Rohrteil (1) einschnappend eingreifenden Haltering (7) fest verbunden ist, dadurch gekennzeichnet, daß sich die Aussparung (4) von der vorderen Stirnfläche der Muffe in das Innere des Endes der Muffe hineinerstreckt.

2. Rohrteil nach Anspruch 1, dadurch gekennzeichnet, daß die Aussparung (4) von zwei Aussparungswänden (5 und 6) mit gleicher Dicke zu ihren freien Enden hin begrenzt ist, wobei sich die beiden Wände (5 und 6) der Aussparung (4) in einem Winkel von 10 bis 10°, vorzugsweise von etwa 25°, zu der Achse (23) des Rohrteils (1) erstrecken.

3. Rohrteil nach Anspruch 1 oder 2, dadurch gekennzeichnet, daß der in Eingriff bringbare Endbereich des Halteringes (7) zwei elastisch verformbare Lippen (14, 15) umfaßt.

4. Rohrteil nach einem oder mehreren der vorhergehenden Ansprüche, dadurch gekennzeichnet, daß die Abmessungen des Halterings (7) derart ausgelegt sind, daß der Außenumfang des Muffenendes (2) einer Druckspannung ausgesetzt ist.

5. Rohrteil nach den Ansprüchen 1 bis 4, dadurch gekennzeichnet, daß sich das Material des Halterings (7) in die Aufnahmekammer (3) der Muffenendes (2) für den Dichtungskörper erstreckt und ein Teil der die Aussparung (4) begrenzenden Aussparungswand (6) mit einem sich einwärts erstreckenden Vorsprung ausgebildet ist, der in eine Aushölung an der Außenseite eines Mündungsstücke (8) des Halterings eingreift.

6. Rohrteil nach einem oder mehreren der vorhergehenden Ansprüche, dadurch gekennzeichnet, daß der Querschnitt des Dichtungskörpers (10) aus zwei oder mehreren Dreiecken (12, 13) besteht, die durch den Teil (21) des Dichtungskörpers (10) miteinander verbunden sind und sich in dem Moment umlegen, in dem ein Einsteckrohrteil eingesetzt wird.

7. Rohrteil nach einem oder mehreren der vorhergehenden Ansprüche, dadurch gekennzeichnet, daß der Haltering (7) eine kegelstumpfförmige Fläche (9) mit einem beginnend von ihrer Vorderseite abnehmenden Durchmesser aufweist, wobei der kleinste Innendurchmesser der kegelstumpfförmigen Fläche (9) vorzugsweise geringer als der Außendurchmesser des einzusetzenden Einsteckrohrteils ist.

8. Rohrteil nach einem oder mehreren der vorhergehenden Ansprüche, dadurch gekennzeichnet, daß der Haltering (7) einen mit der vorderen Stirnfläche der Muffe (2) in Eingriff stehenden elastischen Teil (20) aufweist.

9. Rohrteil nach einem oder mehreren der vorhergehenden Ansprüche, dadurch gekennzeichnet, daß der Dichtungskörper (10) durch gemeinsames Spritzgießen fest mit dem Haltering (7) verbunden ist, wobei der Haltering aus einem thermoplastischen oder einem steifen wetterfesten Gummi besteht, während der Dichtungskörper aus thermoplastischem Gummi besteht.

10. Rohrteil nach einem oder mehreren der vorhergehenden Ansprüche, dadurch gekennzeichnet, daß ein Einsteckrohrteil (1) mit dem Dichtungskörper (10) in Eingriff steht und sich in das Innere des Muffenendes hineinerstreckt.

FIG: 1.

FIG. 2.